# EUROPÄISCHE PATENTSCHRIFT

(11) **EP 0 417 039 B1**
(45) Veröffentlichungstag und Bekanntmachung des Hinweises auf die Patenterteilung: **15.12.1993**
(21) Anmeldenummer: 90810645.3
(22) Anmeldetag: 28.08.1990
(51) Int. Cl.: G03B 21/20, G02B 19/00

(54) **Beleuchtungsvorrichtung für Projektionszwecke**
Illumination device for projection means
Dispositif d'éclairage pour projecteur

(30) Priorität: 04.09.1989 CH 3193/89
(43) Veröffentlichungstag der Anmeldung: 13.03.1991
(73) Patentinhaber: GRETAG Aktiengesellschaft, CH-8105 Regensdorf (CH)
(72) Erfinder: Rhomberg, Bruno, CH-8915 hausen (CH); Frick, Beat, Dr., CH-8107 Buchs (CH)
(74) Vertreter: Kleewein, Walter, Dr.

(56) Entgegenhaltungen:
- DE-B- 1 014 836
- DE-C- 561 573
- FR-A- 1 095 418
- FR-A- 1 394 183
- US-A- 2 817 997
- US-A- 3 457 401
- US-A- 4 537 478

## Beschreibung

Die Erfindung betrifft eine Beleuchtungsvorrichtung für Projektionszwecke, insbesondere für einen Filmprojektor oder Fernsehbildprojektor nach dem Eidophor-System, mit einer rundum strahlenden Lichtquelle, um die auf einer die Lichtquelle in deren Strahlungszentrum schneidenden Ebene mehrere mit ihren optischen Achsen zur Lichtquelle ausgerichtete Kondensoren sowie den Kondensoren jeweils zugeordnete, um eine quer zum Lichtweg in der Ebene verlaufende Achse gekippte Ablenkspiegel angeordnet sind, durch die mehrere Abbildungen der Lichtquelle auf einer in Abstand von der Ebene durch die Lichtquelle vorgesehenen, benachbarte abbildende optische Komponenten aufweisenden Sekundärlichtquellenfläche erzeugbar sind, der eine Optik zugeordnet ist, durch die das Licht der Sekundärlichtquellenfläche zum Bildfeld sowie zur Eintrittspupille einer im Strahlengang nachgeordneten Projektionsoptik gelangt und durch die die Bilder der Kondensoren in die Bildfeldebene übereinander und gegenseitig verdreht abgebildet werden.

Eine derartige Beleuchtungsvorrichtung ist aus der DE-A-1 547 414 bekannt und verfügt als lichtstarke Lichtquelle über eine Xenon-Gasentladungslampe, die in der Nähe ihrer Kathode am hellsten leuchtet. Um die im wesentlichen stabförmige Xenon-Gasentladungslampe sind in Draufsicht im Quadrat vier Kondensoren angeordnet. Die Kondensoren bestehen jeweils aus einer sphärischen Linse und einer weiteren Linse.

Das aus den Kondensoren in vier rechtwinklig zueinander verlaufenden Richtungen austretende Licht wird jeweils mit Hilfe eines Ablenkspiegels nach innen in Richtung der Verlängerung der Achse der Lichtquelle umgelenkt und erreicht vier sich dachförmig einander berührende Feldlinsen, in denen durch die Kondensorlinsen Abbildungen der Lichtquelle erzeugt werden. Die vier Abbildungen der inhomogen strahlenden Lichtquelle bilden dabei in den Feldlinsen eine Sekundärlichtquelle mit einer sternförmigen Helligkeitsverteilung, wobei die hellsten Teile der Abbildungen möglichst nahe bei der optischen Achse liegen. Die optische Achse liegt im Scheitelpunkt der Grenzen zwischen den vier einander berührenden Feldlinsen. Daher ist die bekannte Vorrichtung so justiert, daß die hellsten Bereiche der Lichtbogenbilder in der Nähe der in Draufsicht dreieckförmigen Feldlinsenberandungen liegen. Da die genaue Lage der hellsten Bereiche kritisch ist, führen geringe örtliche Verschiebungen des Lichtbogens zu störenden Helligkeitsschwankungen in der nachgeordneten Optik.

Von der Feldlinsen werden die Kondensorlinsen in ein Bildfenster abgebildet, dem eine Bildfensterlinse zugeordnet ist, die ein Muster der sternförmigen Sekundärlichtquelle in der Projektionsoptik erzeugt. Auf diese Weise soll erreicht werden, daß der Außenumfang des sternförmigen Musters der Lichtquellenabbildungen sich weitgehend der Kreisform der Eintrittspupille der Projektionsoptik annähert, um eine gute Ausnutzung der Pupille zu erreichen. Wenn jedoch statt eines quadratischen Bildfeldes und einer runden Pupille eine elliptische Pupillenform vorliegt, wie dies beispielsweise der Fall ist, wenn ein Barren-System einer Schlierenoptik für einen Eidophorprojektor die kreisförmige Pupille der Projektionsoptik in eine Ellipse verformt, ergibt sich bei der bekannten Beleuchtungsvorrichtung ein besonders störender Intensitätsverlust.

Der Erfindung liegt die Aufgabe zugrunde, eine Vorrichtung der eingangs genannten Art zu schaffen, die sich durch eine hohe Lichtausbeute, eine geringe Empfindlichkeit gegenüber örtlichen Verschiebungen des Lichtbogens sowie eine gute Anpassbarkeit an unterschiedliche Pupillenformen auszeichnet.

Diese Aufgabe wird erfindungsgemäß dadurch gelöst, daß die in der Sekundärlichtquellenfläche vorgesehenen optischen Komponenten als benachbarte Segmente ausgebildet sind, die entlang ihren Berandungen gegenseitig verschränkt sind, und daß die Ablenkspiegel bezüglich der von den optischen Achsen der Kondensoren aufgespannten Ebene um Achsen gekippt sind, die entsprechend den Verschränkungen der zugeordneten Segmente ebenfalls gegeneinander verschränkt sind.

Dadurch, daß die Ablenkspiegel das einfallende Licht nicht in Richtung des Lotes auf die Mitte der von den optischen Achsen der Kondensoren aufgespannten Ebene, sondern seitlich versetzt ablenken, erzeugen die Kondensoren durch Abbilden der Lichtquelle eine Sekundärlichtquelle, die unter Berücksichtigung der Helligkeitsverteilung im Lichtbogen und der Form der Eintrittspupille der nachfolgenden Optik bezüglich ihrer Form und Ausleuchtung leicht optimiert werden kann.

Wenn als Lichtquelle eine Xenon-Kurzbogenlampe verwendet wird, und die Pupille der dem Beleuchtungssystem nachfolgenden Optik eine Kreisform hat, so bestehen gemäß einem Ausführungsbeispiel der Erfindung die benachbarten Segmente aus sphärischen Spiegelelementen, die jeweils durch Vierteilen eines sphärischen Spiegels entstehen und propellerartig oder windflügelartig gegeneinander verschränkt unmittelbar benachbart angeordnet sind. Die Spiegelelemente oder Spiegelsegmente weisen dabei in radialer Richtung jeweils die gleichen Richtungen wie die optischen Achsen durch die Kondensoren und die zugeordneten Ablenkspiegel, jedoch gelangt das Licht über einen Ablenkspiegel jeweils zu einem Spiegelelement, das sich in Richtung des Lotes auf die von den Kondensorachsen aufgespannte Ebene näher dem benachbarten Ablenkspiegel befindet. Dabei bilden die Lichtquellenbilder kein sternförmiges Muster wie beim eingangs erwähnten Stand der Technik, sondern ein Muster in Gestalt eines quadratischen Ringes, das insgesamt eine höhere Lichtausbeute als bei dem bekannten sternförmigen Muster gestattet.

Zweckmäßige Ausgestaltungen und Abwandlungen der Erfindung in Abhängigkeit von der verwendeten Lichtquelle, dem Bildfeld und der Pupille der nachfolgenden Projektionsoptik ergeben sich aus den Unteransprüchen.

Nachfolgend werden Ausführungsbeispiele der Erfindung anhand der Zeichnung näher beschrieben. Es zeigen:
- Fig. 1: eine Seitenansicht der erfindungsgemäßen Beleuchtungsvorrichtung, teilweise im Schnitt mit drei verschiedenen Schnittebenen,
- Fig. 2: eine Draufsicht auf die Kondensoranordnung mit den verschränkten Ablenkspiegeln der Beleuchtungsvorrichtung,
- Fig. 3: eine Ansicht auf die Beleuchtungsvorrichtung in Richtung des Pfeils III in Fig. 1 entgegen der Richtung des austretenden Lichtbündels,
- Fig. 4: eine schematische Darstellung einer Draufsicht auf die Spiegelelemente der Beleuchtungsvorrichtung in Richtung des Pfeils IV in Fig. 1,
- Fig. 5: eine gegenüber Fig. 4 vergrößerte Ansicht auf die Spiegelelemente entgegen der Richtung des Pfeils IV in Fig. 1,
- Fig. 6: eine schematische Darstellung einer Draufsicht in Strahlrichtung auf eine elliptisch gestaltete Spiegelelementanordnung mit einem Achsenverhältnis von 1,85,
- Fig. 7: eine der Fig. 6 entsprechende Darstellung für ein Achsenverhältnis von etwa 3,
- Fig. 8: eine Draufsicht auf eine kreisförmige Spiegelelementanordnung mit abgebildeten Lichtbögen einer Halogenmetalldampflampe,
- Fig. 9: eine Draufsicht auf eine Spiegelelementanordnung für eine Beleuchtungsvorrichtung mit einer Halogenmetalldampflampe und einem Achsenverhältnis der elliptischen Spiegelelementanordnung von 1,33 und
- Fig. 10: eine schematische Draufsicht auf eine elliptische Spiegelelementanordnung für eine Beleuchtungsvorrichtung mit einer Halogenmetalldampflampe und einem Achsenverhältnis von 1,78 für eine nachfolgende Spiegeloptik mit einer zentralen Abschattung.

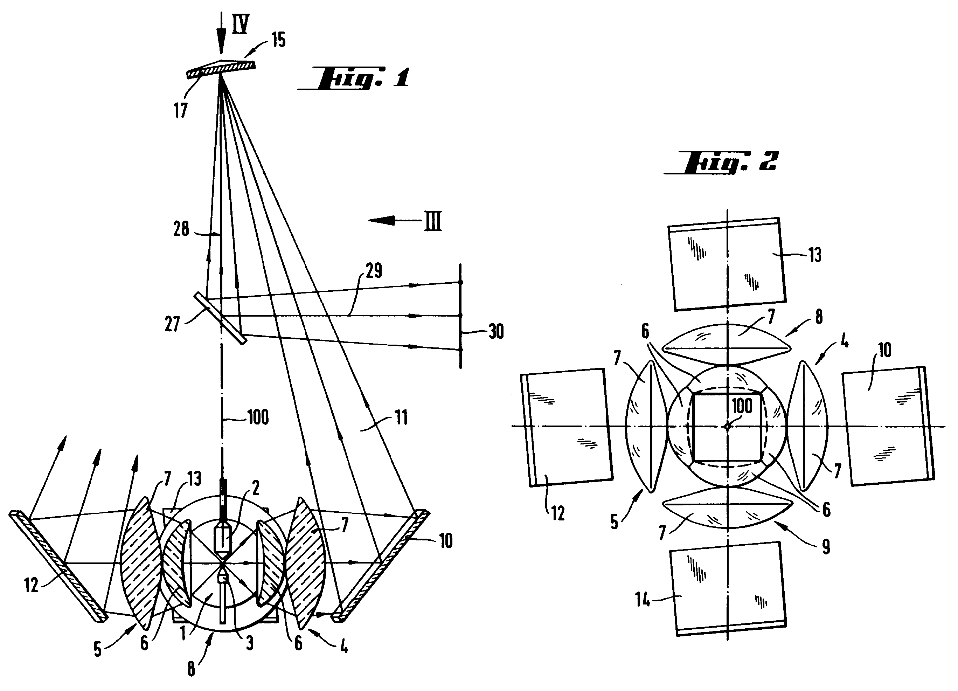

In Fig. 1 ist schematische eine Beleuchtungsvorrichtung für Projektionszwecke mit ihrem Lampenhaus dargestellt. Die Beleuchtungsvorrichtung verfügt über eine entlang einer Hauptachse 100 ausgerichtete Xenon-Kurzbogenlampe 1, deren Licht mit Hilfe der Beleuchtungsvorrichtung optimal so gesammelt werden soll, daß möglichst viel Licht in einen begrenzten Lichtkanal eingespeist wird, der durch das Bildfeld und die Pupille der nachfolgenden Projektionsoptik, die in der Zeichnung nicht dargestellt ist, bezüglich seiner Form und seiner Größe gegeben ist. Bei der nachfolgenden Projektionsoptik kann es sich um die Optik eines Eidophor-, eines Film-, eines Dia- oder eines anderen Lichtventilprojektors handeln. Derartige Projektoren weisen ein Bildfenster oder Bildfeld auf, das eine rechteckige oder in besonderen Fällen eine quadratische Form hat, die möglichst homogen mit einem definierten Randabfall ausgeleuchtet werden soll. Bei dem Bildfeld kann es sich um ein Diapositiv, ein Teilbild eines Filmes oder ein elektronisch erzeugtes Bild handeln, wie es beispielsweise im Eidophor-Projektor verwendet wird. Die dabei vorkommenden Eintrittspupillen der folgenden Optik können die Form einer Kreisscheibe, einer ellipsenförmigen Scheibe oder bei Verwendung von Spiegeloptiken auch die Form eines Kreis- bzw. Ellipsenringes haben.

In Fig. 1 ist die als Lichtquelle für die Beleuchtungsvorrichtung dienende Xenon-Kurzbogenlampe 1 ohne den vorhandenen Glaskolben dargestellt. Die Xenon-Kurzbogenlampe 1 enthält im Innern des nicht dargestellten Glaskolbens eine Anode 2 und eine Kathode 3. Beim Betrieb einer solchen Gasentladungslampe ergibt sich eine stark inhomogene Leuchtdichteverteilung, wobei der Bereich größter Helligkeit an der Kathode 3 liegt und die Anode 2 eine Abschattung bewirkt, die Asymmetrien in der Helligkeitsverteilung des Bildes eines von der Xenon-Kurzbogenlampe 1 beaufschlagten Kondensors erzeugt.

In Fig. 1 erkennt man rechts neben der Xenon-Kurzbogenlampe 1 einen ersten Kondensor 4 und links von der Xenon-Kurzbogenlampe 1 einen zweiten Kondensor 5 in einem Schnitt durch eine durch die Hauptachse 100 verlaufende Ebene. Jeder der Kondensoren 4, 5 kann mehrere Linsen aufweisen und insbesondere, wie in Fig. 1 dargestellt, aus einem Meniskus 6 und einer Asphäre 7 bestehen, deren optische Achsen rechtwinklig zur Hauptachse 100 und zur Längsachse der Xenon-Kurzbogenlampe 1 durch deren Lichtbogen verlaufen.

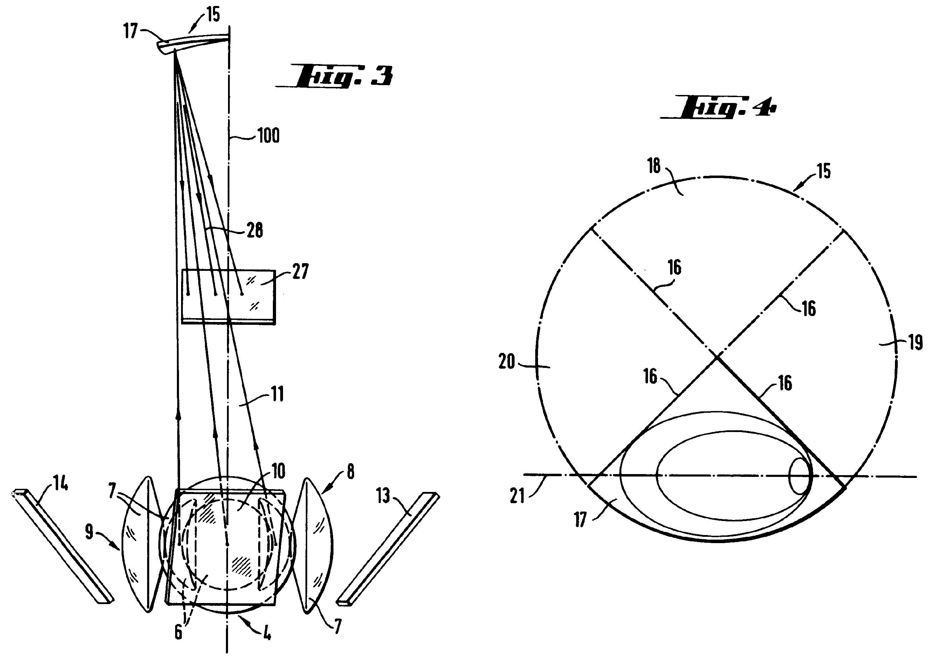

Da die Xenon-Kurzbogenlampe 1 nicht nur Lichtströme in Richtung der in Fig. 1 im Schnitt gezeichneten Kondensoren 4 und 5, sondern auch rechtwinklig zur Hauptachse 100 in andere Richtungen aussendet, sind ein dritter Kondensor 8 und ein vierter Kondensor 9 vorgesehen, die in Fig. 2 in einer Draufsicht zu erkennen sind. Die vier Kondensoren 4, 5, 8 und 9 umgeben die Xenon-Kurzbogenlampe 1 in der Art eines Würfels, in dessen Zentrum sich der Lichtbogen befindet, und dessen vier Seitenflächen durch die vier Kondensoren 4, 5, 8 und 9 gebildet sind, die jeweils das Licht erfassen, welches etwa in ein Sechstel des gesamten Raumwinkels ausgestrahlt wird. Die vier Kondensoren 4, 5, 8 und 9 sind mit rechtwinklig zueinander und zur Hauptachse 100 verlaufenden optischen Achsen und mit einem engen Luftspalt in unmittelbarer Nähe des in der Zeichnung nicht dargestellten Glaskolbens der Xenon-Kurzbogenlampe 1 angeordnet und in einem würfelförmigen Gehäuse befestigt, aus dem an der Oberseite und Unterseite die der Anode 2 und der Kathode 3 zugeordneten Hälse des Glaskolbens der Xenon-Kurzbogenlampe 1 rechtwinklig zu der in Fig. 2 dargestellten Zeichenebene herausragen.

Wie man anhand von Fig. 2 erkennt, berühren sich die Ränder der Meniskuslinsen 6 der vier Kondensoren 4, 5, 8, 9 entlang einer schmalen bogenförmigen Fläche, weshalb sich bei einer Draufsicht auf einen Kondensor 4, 5, 8, 9 in Richtung der optischen Achse oder bei einer Abbildung ein Kondensorbild ergibt, das im wesentlichen quadratisch mit tonnenförmig verformten Rändern ist. Das in das tonnenförmig verzerrte Quadrat einschreibbare größte Quadrat gibt dabei den im Beleuchtungssystem ausgenutzten Bereich des Kondensorbildes an.

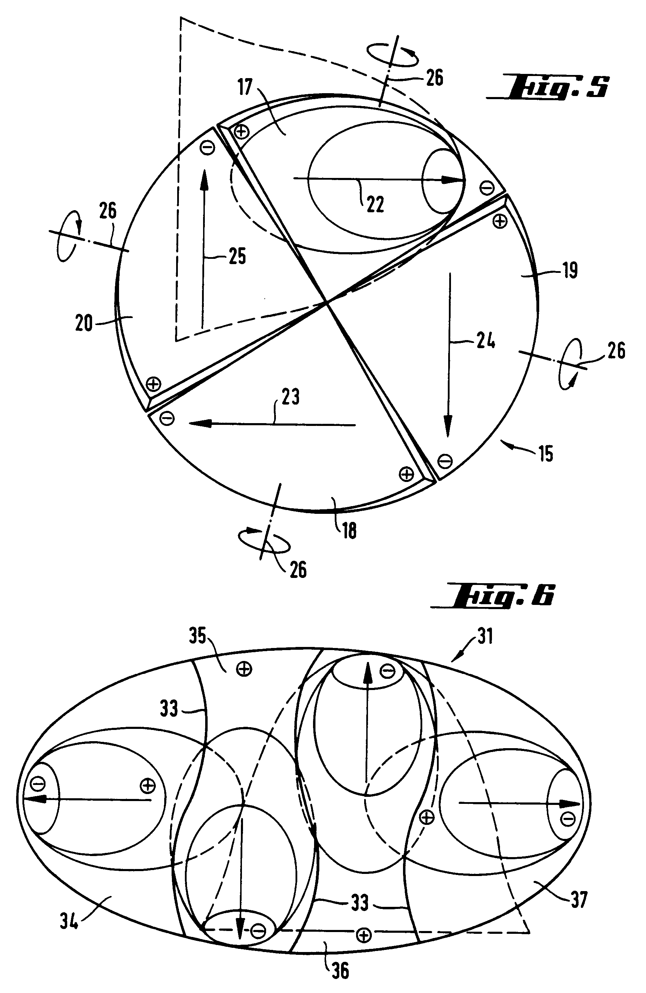

Dem ersten Kondensor 4 ist ein erster flacher, gegebenenfalls als Kaltlichtspiegel ausgebildeter justierbarer Ablenkspiegel 10 zugeordnet, der in Fig. 1 im Schnitt, in Fig. 2 in einer Draufsicht in Richtung der Längsachse der Xenon-Kurzbogenlampe 1 und in Fig. 3 in einer Rückansicht in Richtung der optischen Achse des ersten Kondensors 4 dargestellt ist. Der Ablenkspiegel 10 ist in einem rechteckigen justierbaren Rahmen befestigt, der es gestattet, den ersten Ablenkspiegel 10 um mindestens zwei Achsen zu verkippen und zu justieren.

Der erste Ablenkspiegel 10 ist in der Nähe des ersten Kondensors 4 schräg zu dessen optischer Achse angeordnet. In Fig. 1 ist der erste Ablenkspiegel 10 im Schnitt dargestellt. Der erste Ablenkspiegel 10 ist im Bezug auf die optische Achse des ersten Kondensors 4 so ausgerichtet, daß das aus dem Kondensor 4 entlang der Schnittebene durch die Kondensoren 4, 5, 8, 9 austretende Lichtbündel vom ersten Ablenkspiegel 10 nicht nur in Richtung der Hauptachse 100 sondern auch nach vorne aus der erwähnten Schnittebene heraus abgelenkt wird.

Der in Fig. 1 eingezeichnete Strahlengang verläuft somit von der Xenon-Kurzbogenlampe 1 bis zum ersten Ablenkspiegel 10 in der Zeichenebene und im weiteren Verlauf oberhalb dieser Zeichenebene, die in Fig. 1, unten durch die Längsachsen der Kondensoren 4 und 5 und die Hauptachse 100 verläuft.

Der erste Ablenkspiegel 10 ist somit nicht nur um eine Achse rechtwinklig zur Zeichenebene, sonder auch um eine zweite Achse innerhalb der Zeichenebene verkippt, was in Fig. 2 zur Verdeutlichung der dadurch bewirkten Verschränkung übertrieben stark veranschaulicht ist. In Fig. 3 erkennt man, wie das vom ersten Ablenkspiegel 10 reflektierte Strahlenbündel 11 aus der durch die Längsachse der Xenon-Kurzbogenlampe 1, d.h. die Hauptachse 100, und die optische Achse des ersten Kondensors 4 aufgespannten Ebene seitlich in Fig. 3 nach links heraustritt.

Auf der dem ersten Ablenkspiegel 10 gegenüberliegenden Seite der Xenon-Kurzbogenlampe 1 ist ein zweiter Ablenkspiegel 12 angeordnet, der das den zweiten Kondensor 5 verlassende Lichtbündel in Fig. 1 nach oben und nach hinten aus der Zeichenebene heraus ablenkt. Die dazu erforderliche Orientierung des zweiten ebenfalls justierbaren Ablenkspiegels 12 ist in Fig. 2 etwas übertrieben veranschaulicht.

Fig. 2 veranschaulicht weiterhin einen dritten justierbaren Ablenkspiegel 13 und einen vierten justierbaren Ablenkspiegel 14, die jeweils dem dritten Kondensor 8 und dem vierten Kondensor 9 zugeordnet und in Fig. 3 in einem seitlichen Schnitt zu erkennen sind.

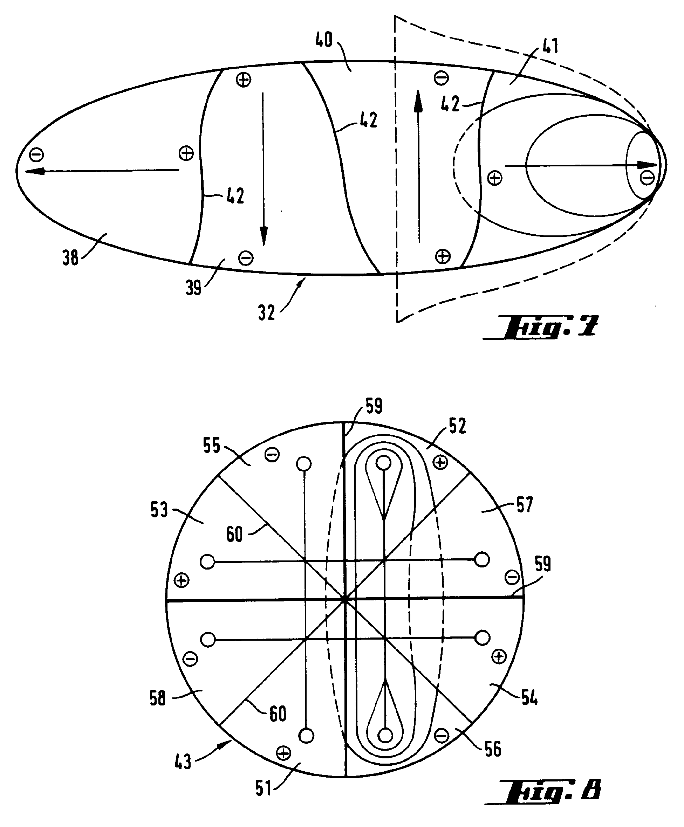

Die optischen Achsen der Kondensoren 4, 5, 8 und 9 liegen auf einer Ebene, die rechtwinklig zur Hauptachse 100 und damit zur Längsachse der Xenon-Kurzbogenlampe 1 liegt und zwischen deren Anode 2 und Kathode 3 verläuft. In einem Abstand, bei dem die Kondensoren 4, 5, 8 und 9 ein etwa um den Vergrößerungsfaktor 10 vergrößertes Bild des Lichtbogens der Xenon-Kurzbogenlampe 1 erzeugen, ist oberhalb der durch die optischen Achsen der Kondensoren 4, 5, 8, 9 gebildeten Ebene koaxial zur Längsachse durch die Xenon-Kurzbogenlampe 1 eine Sammelplatte 15 angeordnet, die in Draufsicht in Richtung auf die Xenon-Kurzbogenlampe 1 die in Fig. 4 gezeigte Gestalt mit einem kreisförmigen äußeren Umriß hat. Die Sammelplatte 15 erstreckt sich somit quer zum Lot auf die von den optischen Achsen der Kondensoren 4, 5, 8 und 9 aufgespannten Ebene. Die Sammelplatte 15 besteht aus einem sphärischen Spiegel, vorzugsweise einem Kaltlichtspiegel, der entlang den in Fig. 4 erkennbaren Trennlinien 16 in ein erstes Segment 17, zweites Segment 18 drittes Segment 19 und viertes Segment 20 zerteilt ist. Die Segmente 17, 18, 19, 20 bilden somit Viertelsegmente oder abbildende sphärische Spiegelelemente.

Die Segmente 17, 18, 19, 20 sind in einem in der Zeichnung nicht dargestellten quadratischen Rahmen befestigt, der es gestattet, die Segmente 17, 18, 19, 20 um zwei rechtwinklig zueinander und zur Hauptachse 100 verlaufende Achsen in der Ebene des Rahmens zu verdrehen oder zu verkippen.

In Fig. 4 ist im ersten Segment 17 der Sammelplatte 15 schematisch das vom ersten Kondensor 4 erzeugte Bild des Lichtbogens der Xenon-Kurzbogenlampe 1 durch Äquiluminanzlinien dargestellt, wobei das Bild des Lichtbogens sich entlang einer Sekante des kreisförmigen Umrisses der Sammelplatte 15 erstreckt und der hellste Bereich des Lichtbogenbildes rechts in der Nähe der Trennlinie 16 zwischen dem ersten Segment 17 und dem dritten Segment 19 liegt.

In Fig. 1 ist das erste Segment 17 der Sammelplatte 15, auf das mit Hilfe des ersten Kondensors 4 ein erstes Lichtbogenbild der Xenon-Kurzbogenlampe 1 abgebildet wird, allein und im Schnitt dargestellt. Die Schnittebene verläuft dabei gegenüber der Schnittebene durch die Kondensoren 4, 5 in Betrachtungsrichtung nach vorne etwas versetzt entlang der in Fig. 4 eingezeichneten Schnittlinie 21. In Fig. 3 erkennt man die Stirnansicht auf das erste Segment 17 entlang der Trennlinie 16 zum dritten Segment 19 bei Abwesenheit der übrigen Segmente 18, 19, 20, wobei anhand der Fig. 1 und 3 veranschaulicht werden soll, wie das erste Segment 17 um zwei rechtwinklig zur Hauptachse 100 verlaufende Achsen verkippt ist, so daß die vier Segmente 17, 18, 19, 20 in der Art eines Windflügels oder Propellers mit gegenseitigen Verschränkungen der einzelnen Blätter angeordnet sind. Durch die Verdrehung der Segmente 17, 18, 19, 20 um eine erste Drehachse entlang ihrer Winkelhalbierenden und entlang einer zweiten jeweils rechtwinklig zu ihrer Winkelhalbierenden verlaufenden Achse wird die Verwindung des durch die verschränkten Ablenkspiegel 10, 12, 13, 14 erzeugten Strahlenganges so kompensiert, daß schließlich das Licht aller vier aus unterschiedlichen Richtungen eintreffenden Strahlengänge im Bildfeld zusammengeführt wird.

Der erste Ablenkspiegel 10 im Strahlengang des ersten Kondensors 4 ist so orientiert, daß das Lichtbogenbild auf dem in Richtung des vierten Ablenkspiegels 14 weisenden ersten Segment 17 und nicht auf dem in Richtung des ersten Ablenkspiegels 10 weisenden dritten Segment 19 abgebildet wird. Auf diese Weise erstreckt sich das in Fig. 4 unten veranschaulichte Lichtbogenbild entlang der Schnittlinie 21 oder einer Sekante der Sammelplatte 15 und nicht entlang einem Radius der Sammelplatte 15. Dabei sind die Segmente 17 bis 20 vorzugsweise so orientiert, daß die Projektionen ihrer Winkelhalbierenden auf die von den optischen Achsen der Kondensoren 4, 5, 8, 9 aufgespannte Ebene in die gleichen Richtungen weisen wie die optischen Achsen der Kondensoren 4, 5, 8, 9.

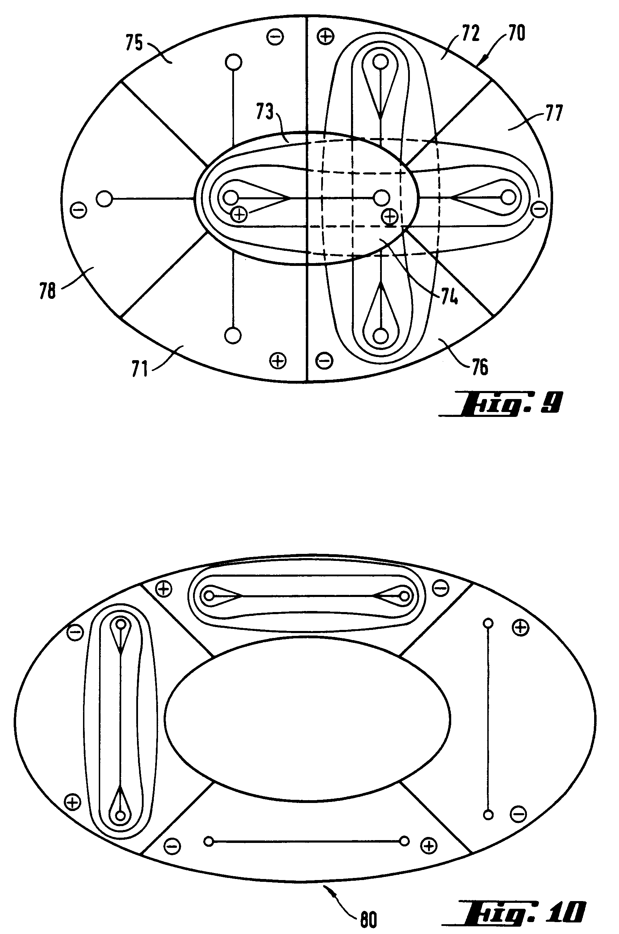

In Fig. 5 erkennt man die Sammelplatte 15 mit ihren Segmenten 17 bis 20 in einer vergrößerten Ansicht von unten, d.h. entgegen der Richtung des Pfeils IV in Fig. 1. Das mit Hilfe des ersten Kondensors 4 auf dem ersten Segment 17 erzeugte Lichtbogenbild ist in Fig. 5 oben durch seine Äquiluminanzlinien ebenfalls eingezeichnet, wobei die außerhalb des Segmentes 17 liegenden Äquiluminanzlinien gestrichelt dargestellt sind. Zusammen mit dem Lichtbogenbild ist zur Symbolisierung des Lichtbogenbilds ein Lichtbogenbildpfeil 22 dargestellt, dessen Pfeilspitze angibt, wo sich der hellste Bereich des Lichtbogenbildes befindet. Die Pfeilrichtung gibt dabei die Orientierung des Lichtbogenbildes an.

Das vom zweiten Ablenkspiegel 12 reflektierte Lichtbündel gelangt zu dem in Fig. 1 nicht dargestellten zweiten Segment 18 der Sammelplatte 15, das jedoch in den Fig. 4 und 5 veranschaulicht ist. Infolge der Orientierung des zweiten Ablenkspiegels 12 verläuft das zweite Lichtbogenbild entlang dem Lichtbogenbildpfeil 23 auf dem dem ersten Segment 17 gegenüberliegenden zweiten Segment 18 mit paralleler aber entgegengesetzter Orientierung.

In entsprechender Weise, wie mit Hilfe der Kondensoren 4 und 5 und den Ablenkspiegeln 10 und 12 auf den Segmenten 17 und 18 Lichtbogenbilder erzeugt worden sind, werden auf den Segmenten 19 und 20 durch die Kondensoren 8 und 9 Lichtbogenbilder erzeugt, die in Fig. 5 durch einen dritten Lichtbogenpfeil 24 und vierten Lichtbogenpfeil 25 symbolisch dargestellt sind.

Man erkennt in Fig. 5, daß die Lichtbogenbilder entlang einem rechteckigen Ring angeordnet sind. Durch die Orientierung der Lichtbogenbilder entlang von Sekanten statt der Winkelhalbierenden der Segmente 17 bis 20 wird erreicht, daß die von der Sammelplatte 15 erfaßbare und damit weiterleitbare Lichtmenge größer ist als dies der Fall wäre, wenn die hellsten Bereiche jeweils in der Nähe des Mittelpunktes der Sammelplatte 15 liegen würden und die Lichtbogenbilder jeweils entsprechend der Winkelhalbierenden der Segmente 17 bis 20 orientiert wären. Die oben beschriebene verwundene Strahlführung, um die Hauptachse 100 und das durch die Längsachse der Xenon-Kurzbogenlampe 1 verlaufende Lot auf die von den optischen Achsen der Kondensoren 4, 5, 8, 9 gebildeten Ebene gestattet es somit, daß die Kondensoren 4, 5, 8, 9 den Lichtbogen der Xenon-Kurzbogenlampe 1 über die Ablenkspiegel 10, 12, 13, 14 auf die zugeteilten Segmente 17, 18, 19, 20 der Sammelplatte 15 so abbilden, daß möglichst viel von den hellsten Anteilen des Lichtbogens auf das entsprechende Segment 17, 18, 19, 20 zu liegen kommt und damit die auf eine gegebene Fläche auftreffende Gesamtlichtmenge maximiert wird.

Die Segmente 17 bis 20 sind abbildende Spiegel, die es gestatten, die Kondensorbilder der Kondensoren 4, 5, 8 und 9 je um 90 Grad zueinander gedreht und übereinander abzubilden, wenn die propellerartig angeordneten Segmente 17 bis 20 durch Justieren so verschränkt werden, daß das auf sie aus den unterschiedlichen Richtungen von den Ablenkspiegeln 10, 12, 13, 14 kommende Licht zu einem einzigen gemeinsamen Bildfeld umgelenkt wird. In Fig. 5 sind die Justierachsen 26 entlang den Winkelhalbierenden der Segmente 17, 18, 19, 20 zusammen mit Drehpfeilen eingezeichnet, die anzeigen, wie die einzelnen Segmente 17, 18, 19, 20 verkippt werden müssen, um zu erreichen, daß die von den Segmenten 17, 18, 19, 20 erzeugten Kondensorbilder im Bildfeld übereinander und die vier Sekundärlichtquellen darstellenden Lichtbögen in die Eintrittspupille der nachfolgenden Optik nebeneinander abgebildet werden.

Zusätzlich zu der Drehung um die Justierachsen 26 sind auch jeweils geringfügige Kippungen der Segmente 17, 18, 19, 20 um Achsen rechtwinklig zu den Justierachsen 26 erforderlich. Ohne die erforderlichen Verschränkungen der Segmente 17 bis 20 würden diese die Oberfläche eines Hohlspiegels bilden. Um die Abweichungen gegenüber einem solchen Hohlspiegel infolge der Drehbewegungen um die Justierachse 26 zu veranschaulichen, sind in Fig. 5 Pluszeichen an den Stellen eingetragen, an denen die Segmente 17, 18, 19, 20 aus der Zeichenebene herausgedreht sind. Entsprechend geben die Minuszeichen die Stellen an, wo die Segmentoberflächen unterhalb einer durchgehenden sphärischen Spiegelfläche liegen.

Wie man in den Fig. 1 und 3 erkennt, gelangt das von den Segmenten 17, 18, 19, 20 reflektierte Licht der als Sekundärlichtquellen wirksamen Lichtbogenbilder zu einem für alle Segmente 17, 18, 19, 20 gemeinsamen Auskoppelspiegel 27, der in den Fig. 1 und 3 zu erkennen ist. Der Auskoppelspiegel 27 koppelt das von den Segmenten 17, 18, 19, 20 der Sammelplatte 15 einfallende Licht rechtwinklig zur Hauptachse 100 in Richtung des nachfolgenden Lichtkanals aus. Wie man anhand der Fig. 1 und 3 erkennt, verläuft der Zentralstrahl des Strahlenbündels 28 ausgehend vom Segment 17 in einem Abstand von der Hauptachse 100 und nähert sich derselben umso mehr, je näher es sich dem Auskoppelspiegel 27 nähert, der in Fig. 1 im Schnitt mit einer Schnittebene dargestellt ist, die zwischen der Schnittebene durch die Ablenkspiegel 10, 12 und der Schnittebene durch das erste Segment 17 liegt. Nach der Reflexion am Auskoppelspiegel 27 nähert sich der vom Auskoppelspiegel 27 ausgehende Zentralstrahl 29 weiter der durch die Hauptachse 100 und die optischen Achsen der Kondensoren 4 und 5 aufgespannten Ebene, bis es das in Fig. 1 schematisch dargestellte Bildfenster 30 erreicht, wo die von den Segmenten 17, 18, 19, 20 erzeugten, tonnenförmig verzerrten quadratischen Kondensorbilder abgebildet werden. Am Ort des Bildfensters 30 der beschriebenen Beleuchtungseinrichtung können beispielsweise eine Feldlinse und ein Diapositiv angeordnet werden, das durch die vier jeweils um 90 Grad verdrehten Kondensorbilder mit hoher Lichtstärke und Homogenität beleuchtet wird. Mit einem in der Zeichnung nicht dargestellten Objektiv kann dann das Diapositiv projiziert werden, wobei die Bilder der aus der Sammelplatte 15 vorhandenen Sekundärlichtquellen durch die erwähnte Feldlinse innerhalb der kreisförmigen Eintrittspupille oder Eingangsöffnung der Projektionsoptik abgebildet werden.

Wenn das Bildfeld nicht quadratisch sondern rechteckig und die Form der Pupille der nachfolgenden Optik nicht kreisförmig sondern ellipsenförmig ist, ist es für eine hohe Lichtausbeute zweckmäßig, statt einer kreisförmig berandeten Sammelplatte 15 eine ellipsenförmig berandete Sammelplatte 31 gemäß Fig. 6 oder eine ellipsenförmig berandete Sammelplatte 32 gemäß Fig. 7 zu verwenden. Für eine optimale Beleuchtungsoptik ist nämlich zu beachten, daß gewisse optische Elemente die Pupillenform einer Projektionsoptik stark verändern. So verformt beispielsweise ein in der Schlierenoptik des Eidophor-Systems verwendetes Barrensystem die kreisförmige Pupille der Projektionsoptik in eine Ellipse mit einem Achsenverhältnis von 2,5 : 1.

Wenn ein rechteckiges Bildfenster 30 zu beleuchten ist, ist es vorteilhaft, eine anamorphotische Beleuchtungsoptik einzusetzen, die die quadratischen Kondensorbilder in rechteckige Kondensorbilder mit dem gewünschten Seitenverhältnis und der richtigen Größe umwandeln. Durch eine solche anamorphotische Beleuchtungsoptik wird die nachfolgenden kreisförmige Pupille der Projektionsoptik nach rückwärts gesehen elliptisch verzerrt. Nach diesem Pupillenbild richtet sich der äußere Umriß der Sammelplatten 31 oder 32. Die anamorphotische Beleuchtungsoptik kann im Strahlengang zwischen dem Auskoppelspiegel 27 und dem Bildfenster 30 als gesondertes optisches System vorgesehen sein. Es ist aber auch möglich, die erste Zylinderlinse eines anamorphotischen Systems in die Sammelplatte und die zweite Zylinderlinse in den Auskoppelspiegel 27 zu integrieren, statt alle Komponenten zwischen dem Auskoppelspiegel 27 und dem Bildfenster 30 anzuordnen.

Die in Fig. 6 in Draufsicht dargestellte elliptische Sammelplatte 31 weist ein Achsenverhältnis von 1,85 auf. Dieses Verhältnis entspricht einer der Normen für 35 mm Kinofilm. Die Trennlinien 33 zwischen den Segmenten 34, 35, 36, 37 verlaufen bei der Sammelplatte 31 nicht wie bei der kreisförmigen Sammelplatte 15 entlang von Geraden sondern von Kurven. Die Lage der Trennlinien 33 ist so gewählt, daß die gesamte Lichtausbeute maximal ist und die gewünschte Pupillenform eingehalten wird. Die Form der Trennlinien 33 in Fig. 6 wurde so ermittelt, daß die vier Lichtbogenbilder in der in Fig. 6 erkennbaren Weise mit ihren Äquiluminanzlinien aufgezeichnet wurden und anschließend die Schnittpunkte von Äquiluminanzlinien zur Erzeugung der Trennlinien 33 miteinander verbunden wurden. Bei einem derartigen Vorgehen ergeben sich die in Fig. 6 erkennbaren Segmente, die in der mit Pluszeichen und Minuszeichen veranschaulichten Weise verschränkt werden und ebenfalls sphärische Spiegelelemente sind. Die Lage der Lichtbogenbilder ist entsprechend Fig. 5 durch Pfeile veranschaulicht. Bei der in Fig. 6 dargestellten Orientierung und Lage der Lichtbogenbilder ergibt sich über die elliptische Sammelfläche verteilt eine optimale Gesamtlichtausbeute.

Wenn eine elliptische Sammelfläche für ein Achsenverhältnis von etwa 3 erforderlich ist, was beispielsweise bei einem Fernsehprojektionssystem auftreten kann, ist es erforderlich, die Lichtbogenbild er in Richtung der Hauptachse der Ellipse weiter zu verteilen. Eine derartige Anordnung ist in Fig. 7 zu erkennen, wobei die Trennlinien 42 wiederum die Verbindungslinien zwischen Schnittpunkten von Äquiluminanzlinien der verschiedenen Lichtbogenbilder mit den eingezeichneten Orientierungen und Lagen darstellen. Der Fachmann erkennt, daß es durch eine geeignete Vergrößerung der Lichtbogenbilder sowie deren Orientierung und Anordnung auf einer elliptischen Fläche möglich ist, optimale Trennlinien 33 oder 42 zu ermitteln, die so ausgebildet sind, daß in einem gegebenen Lichtkanal möglichst viel Licht gesammelt werden kann. Bei den vorstehenden Sammelplatten 15, 31 und 32 wurde die unsymmetrische Verteilung des Lichtbogenbildes einer Xenon-Kurzbogenlampe 1 berücksichtigt.

Wenn statt einer Xenon-Kurzbogenlampe eine Halogenmetalldampflampe mit einem zwei Schwerpunkte aufweisenden Lichtbogenbild verwendet werden soll, ergibt sich eine besonders hohe Lichtausbeute, wenn bei einer runden Pupillenform eine entsprechend Fig. 8 ausgebildete und beleuchtete Sammelplatte 43 verwendet wird. Die Sammelplatte 43 besteht wie die vorbeschriebenen kreisförmigen oder elliptischen Sammelplatten aus abbildenden Segmenten 51 bis 58. Im Gegensatz zu den Segmenten 17 bis 20 der Sammelplatte 15 sind diese durch Achtteilen eines sphärischen Spiegels entstanden. Die geraden Trennlinien zwischen den Segmenten 51 bis 58 bilden ein Hauptkreuz 59 und ein diesem gegenüber um 45 Grad verdrehtes Nebenkreuz 60. Wie man in Fig. 8 erkennt, sind die Lichtbogenbilder jeweils paarweise entlang einer Achse des Hauptkreuzes seitlich gegeneinander versetzt angeordnet. Das in Fig. 8 mit seinen Äquiluminanzlinien dargestellte Lichtbogenbild wird vom dritten Kondensor 8 über den dritten Ablenkspiegel 13 auf die Segmente 52 und 56 abgebildet. Das Minuszeichen im Segment 56 gibt an, daß dieses Segment unterhalb der Zeichenebene und das Pluszeichen im Segment 52 gibt an, daß dieses aus der Zeichenebene herausgekippt ist, um die spätere Vereinigung der Lichtstrahlbündel zu erreichen. Das vom ersten Kondensor 4 erzeugte Lichtbogenbild erstreckt sich über die Segmente 53 und 57, das vom zweiten Kondensor 5 erzeugte Lichtbogenbild erstreckt sich über die Segmente 54 und 58 und das vom vierten Kondensor 9 erzeugte Lichtbogenbild erstreckt sich über die Segmente 51 und 55. Bei der in Fig. 8 eingezeichneten Orientierung, Lage und Größe der Lichtbogenbilder ergibt sich für eine runde Pupille eine maximale Lichtausbeute.

Fig. 9 veranschaulicht in einer den vorangehenden Figuren entsprechenden Weise die Ausgestaltung und Beleuchtung einer elliptischen Sammelplatte für eine Halogenmetalldampflampe mit einem Achsenverhältnis von 1,33, wie es z.B. bei Diaprojektoren Anwendung finden kann. Wie man in Fig. 9 erkennt, ist zur Lichtverteilung über die Sammelplatte 70 eine Justierung der Ablenkspiegel 10, 12, 13, 14 vorgesehen, bei der zwei Lichtbogenbilder seitlich versetzt zur Nebenachse und zwei Lichtbogenbilder in Längsrichtung versetzt auf der Hauptachse der Ellipse liegen. Die Segmente 71 bis 78 haben jeweils die in Fig. 9 erkennbare Gestalt und die in Fig. 9 durch Pluszeichen und Minuszeichen veranschaulichte gegenseitige Verschränkung. Die Äquiluminanzlinien der den Segmenten 72 und 76 einerseits und den Segmenten 73 und 77 andererseits zugeordneten Lichtbogenbilder sind in Fig. 9 ebenfalls dargestellt. Die Orientierung der Ablenkspiegel 10, 12, 13, 14 ist so getroffen, daß der erste Ablenkspiegel 10 auf die Segmente 73 und 77, der zweite Ablenkspiegel 12 auf die Segmente 74 und 78, der dritte Ablenkspiegel 13 auf die Segmente 72 und 76 und der vierte Ablenkspiegel 14 auf die Segmente 71 und 75 ausgerichtet ist. Dadurch ergibt sich die in Fig. 9 gezeichnete Überlagerung der Lichtbogenbilder.

Wenn die nachfolgende Projektionsoptik eine Spiegeloptik mit einer zentralen Abschattung ist, muß der zentrale Teil der Ellipse wegfallen. In Fig. 10 ist für einen derartigen Fall eine elliptische Sammelplatte 80 mit einem Achsenverhältnis von 1,78 dargestellt. Die Orientierung der einzelnen Segmente der Sammelplatte 80 ergibt sich durch die eingezeichneten Plus- und Minuszeichen. Die Lage der Lichtbogenbilder ist für zwei Lichtbogenbilder durch die zugeordneten Äquiluminanzlinien und für zwei weitere Lichtbogenbilder entsprechend den Figuren 8 und 9 durch Kreise dargestellt, die die hellsten Bereiche der Lichtbogenbilder symbolisieren und durch Geraden miteinander verbunden sind. Wie man in Fig. 10 erkennt, sind die einzelnen Lichtbogenbilder ähnlich wie bei der Sammelplatte 15 entlang einem Ring angeordnet, wobei durch die Ablenkspiegel 10, 12, 13, 14 jeweils analog zur Sammelplatte 15 nicht das unmittelbar oberhalb dem jeweiligen Ablenkspiegel vorhandene Segment, sondern das in Ringrichtung nächste Segment bestrahlt wird.

## Patentansprüche

1. Beleuchtungsvorrichtung für Projektionszwecke, insbesondere für einen Filmprojektor oder Fernsehbildprojektor nach dem Eidophor-System, mit einer rundum strahlenden Lichtquelle (1), um die auf einer die Lichtquelle (1) in deren Strahlungszentrum schneidenden Ebene vier mit ihren optischen Achsen zur Lichtquelle (1) ausgerichtete Kondensoren (4,5,8,9) sowie den Kondensoren (4,5,8,9) jeweils zugeordnete, um eine quer zum Lichtweg in der Ebene verlaufende Achse gekippte Ablenkspiegel (10,12,13,14) angeordnet sind, durch die vier Abbildungen der Lichtquelle (1) auf einer im Abstand von der Ebene durch die Lichtquelle (1) vorgesehenen, benachbarte abbildende optische Komponenten aufweisenden Sekundärlichtquellenfläche (15,31,32,43,70,80) erzeugbar sind, der eine Optik zugeordnet ist, durch die das Licht der Sekundärlichtquellenfläche zum Bildfeld (30) sowie zur Eintrittspupille einer in Strahlengang (28,29) nachgeordneten Projektionsoptik gelangt und durch die die Bilder der Kondensoren (4,5,8,9) in die Bildfeldebene übereinander und gegenseitig verdreht abgebildet werden, **dadurch gekennzeichnet,** daß die in der Sekundärlichtquellenfläche vorgesehenen optischen Komponenten als benachbarte Segmente (17 bis 20, 34 bis 41, 51 bis 58, 71 bis 78) ausgebildet sind, die entlang ihren Berandungen (16, 33, 42, 59, 60) gegenseitig verschränkt sind, und daß die Ablenkspiegel (10, 12, 13, 14) bezüglich der von den optischen Achsen der Kondensoren (4, 5, 8, 9) aufgespannten Ebene um Achsen gekippt sind, die entsprechend den Verschränkungen der zugeordneten Segmente (17 bis 20, 34 bis 41, 51 bis 58, 71 bis 78) ebenfalls gegeneinander verschränkt sind.

2. Beleuchtungsvorrichtung nach Anspruch 1, dadurch gekennzeichnet, daß die Segmente (17 bis 20, 34 bis 41, 51 bis 58, 71 bis 78) aus Linsen bestehen, die die Kondensorbilder übereinander abbilden.

3. Beleuchtungsvorrichtung nach Anspruch 1, dadurch gekennzeichnet, daß die Segmente (17 bis 20, 34 bis 41, 51 bis 58, 71 bis 78) aus Spiegelsegmenten bestehen.

4. Beleuchtungsvorrichtung nach Anspruch 3, dadurch gekennzeichnet, daß die Spiegelsegmente (17 bis 20, 34 bis 41, 51 bis 58, 71 bis 78) und/oder die Ablenkspiegel (10, 12, 13, 14) als Kaltlichtspiegel ausgebildet sind.

5. Beleuchtungsvorrichtung nach Anspruch 4, dadurch gekennzeichnet, daß die Spiegelsegmente (17 bis 20, 34 bis 41, 51 bis 58, 71 bis 78) Glasträger aufweisen, die als Infrarot-Sammellinse ausgebildet sind.

6. Beleuchtungsvorrichtung nach einem der vorstehenden Ansprüche, dadurch gekennzeichnet, daß die benachbarten Segmente (17 bis 20, 34 bis 41, 51 bis 58, 71 bis 78) einen gemeinsamen äußeren Umriß haben, dessen Gestalt der Form der Eingangspupille der nachfolgenden Optik angepaßt ist.

7. Beleuchtungsvorrichtung nach einem der vorstehenden Ansprüche, dadurch gekennzeichnet, daß im Strahlengang (28, 29) zwischen der Sekundärlichtquellenfläche (15, 31, 43, 70, 80) und dem Bildfeld (30) ein quer zum Strahlengang (28) ausgerichteter Auskoppelspiegel (27) vorgesehen ist.

8. Beleuchtungsvorrichtung nach Anspruch 1, dadurch gekennzeichnet, daß die Lichtquelle (1) eine Kurzbogenlampe ist und die Sekundärlichtquellenfläche (15) abbildende sphärische Spiegelelemente (17 bis 20) aufweist, die jeweils einem Viertelsegment eines sphärischen Spiegels entsprechen und propellerartig gegeneinander verschränkt sowie geringfügig zur Spiegelachse geneigt sind, wobei die vier Ablenkspiegel (10, 12, 13, 14) in ihrer Lage so justiert sind, daß die vier gleichartigen inhomogenen Lichtquellenbilder entlang einem geschlossenen Ring bezüglich der Ablenkspiegel (10, 12, 13, 14) jeweils entlang dem Ring um ein Spiegelelement versetzt auf die Spiegelelemente (17 bis 20) abgebildet sind, die ihrerseits vier um je 90 Grad zueinander gedrehte Kondensorbilder übereinander in das Bildfeld (30) abbilden.

9. Beleuchtungsvorrichtung nach Anspruch 1, dadurch gekennzeichnet, daß die Lichtquelle eine Halogenmetalldampflampe ist und die Sekundärlichtquellenfläche (43) abbildende sphärische Spiegelelemente (51 bis 58) aufweist, die jeweils einem Achtelsegment eines sphärischen Spiegels entsprechen, daß die Trennlinien zwischen den Segmenten (51 bis 58) ein Hauptkreuz (59), das in die Richtungen der Ablenkspiegel (10, 12, 13, 14) ausgerichtet ist, und ein diesem gegenüber um 45 Grad verdrehtes Nebenkreuz (60) bilden, daß die vier Ablenkspiegel (10, 12, 13, 14) so justiert sind, daß die vier Lichtquellenbilder sich jeweils entlang und seitlich versetzt gegenüber einem durchgehenden Arm des Hauptkreuzes (59) erstrecken, und daß die jeweils einseitig durch einen durchgehenden Arm des Hauptkreuzes (59) berandeten einander paarweise zugeordneten Spiegelsegmente (51 bis 58) jeweils so verschränkt sind, daß die von den Spiegelelementen (51 bis 58) erzeugten vier Kondensorbilder sich im Bildfeld (30) überlappen.

10. Beleuchtungsvorrichtung nach Anspruch 1, dadurch gekennzeichnet, daß die Lichtquelle eine Kurzbogenlampe ist und im Strahlengang eine anamorphotische Beleuchtungsoptik vorgesehen ist, um ein quadratisches Kondensorbild in ein Rechteck umzuwandeln, und daß die Sekundärlichtquellenfläche (31, 32) einen äußeren Umriß in Gestalt einer Ellipse aufweist und entlang von Kurvenlinien (33) in Segmente (34 bis 41) aufgeteilt ist.

11. Beleuchtungsvorrichtung nach Anspruch 10, dadurch gekennzeichnet, daß die vier Ablenkspiegel (10, 12, 13, 14) so justiert sind, daß in der Mitte der Ellipse zwei in Längsrichtung versetzte Lichtquellenbilder quer zur Hauptachse der Ellipse und im Bereich der Hauptachsenenden längs der Hauptachsen jeweils ein Lichtquellenbild mit den hellsten Bereichen jeweils nach außen weisend abgebildet wird.

12. Beleuchtungsvorrichtung nach Anspruch 10, dadurch gekennzeichnet, daß die Kurvenlinien (33) zwischen den Segmenten (34 bis 41) entlang den Schnittpunkten von Linien gleicher Helligkeit benachbarter Lichtquellenbilder verlaufen.

13. Beleuchtungsvorrichtung nach Anspruch 1, dadurch gekennzeichnet, daß die Lichtquelle eine Halogenmetalldampflampe ist, daß im Strahlengang eine anamorphotische Beleuchtungsoptik vorgesehen ist, um ein quadratisches Kondensorbild in ein Rechteck umzuwandeln, und daß die Sekundärlichtquellenfläche (70, 80) einen äußeren Umriß in Gestalt einer Ellipse aufweist und entlang von Geraden und einer konzentrischen inneren Ellipse in Segmente aufgeteilt ist.

14. Beleuchtungsvorrichtung nach Anspruch 13, dadurch gekennzeichnet, daß die vier Ablenkspiegel (10, 12, 13, 14) so justiert sind, daß zwei Lichtbogenbilder seitlich versetzt zur Nebenachse und zwei Lichtbogenbilder in Längsrichtung versetzt auf der Hauptachse der Ellipse (70) liegen.

15. Beleuchtungsvorrichtung nach Anspruch 13, dadurch gekennzeichnet, daß die vier Ablenkspiegel (10, 12, 13, 14) so justiert sind, daß die vier Lichtbogenbilder entlang einem elliptischen Ring (80) abgebildet werden.

## Claims

1. An illuminating apparatus for projection purposes, especially for a film projector or television image projector according to the eidophor system, comprising a light source (1) that radiates in all directions and around which are arranged, in a plane intersecting the light source (1) in its centre of radiation, four condensers (4, 5, 8, 9) with their optical axes aligned on the light source (1), and deflecting mirrors (10, 12, 13, 14) each associated with a respective condenser (4, 5, 8, 9) and tilted about an axis extending transversely to the light path in that plane, by means of which four images of the light source (1) can be produced on a secondary light source surface (15, 31, 32, 43, 70, 80) provided at a distance from the plane through the light source (1) and comprising adjacent imaging optical components, with which secondary light source surface there is associated an optical device by means of which the light of the secondary light source surface reaches the image field (30) and also the entrance pupil of a projecting optical device arranged downstream in the beam path (28, 29) and by means of which the images of the condensers (4, 5, 8, 9) are reproduced in the plane of the image field superimposed on one another and rotated relative to one another, wherein the optical components provided in the secondary light source surface are in the form of adjacent segments (17 to 20, 34 to 41, 51 to 58, 71 to 78) which are skewed relative to one another along their borders (16, 33, 42, 59, 60), and wherein the deflecting mirrors (10, 12, 13, 14) are tilted relative to the plane defined by the optical axes of the condensers (4, 5, 8, 9) about axes that are likewise skewed relative to one another in accordance with the skewing of the associated segments (17 to 20, 34 to 41, 51 to 58, 71 to 78).

2. An illuminating apparatus according to claim 1, wherein the segments (17 to 20, 34 to 41, 51 to 58, 71 to 78) consist of lenses that reproduce the condenser images superimposed on one another.

3. An illuminating apparatus according to claim 1, wherein the segments (17 to 20, 34 to 41, 51 to 58, 71 to 78) consist of mirror segments.

4. An illuminating apparatus according to claim 3, wherein the mirror segments (17 to 20, 34 to 41, 51 to 58, 71 to 78) and/or the deflecting mirrors (10, 12, 13, 14) are in the form of metal oxide vaporized mirrors.

5. An illuminating apparatus according to claim 4, wherein the mirror segments (17 to 20, 34 to 41, 51 to 58, 71 to 78) have glass carriers in the form of infrared collector lenses.

6. An illuminating apparatus according to any one of the preceding claims, wherein the adjacent segments (17 to 20, 34 to 41, 51 to 58, 71 to 78) have a common external contour with a shape adapted to the shape of the entrance pupil of the optical device that follows.

7. An illuminating apparatus according to any one of the preceding claims, wherein an output mirror (27) is provided in the beam path (28, 29) between the secondary light source surface (15, 31, 43, 70, 80) and the image field (30), which output mirror (27) is oriented transversely to the beam path (28).

8. An illuminating apparatus according to claim 1, wherein the light source (1) is a short arc lamp and the secondary light source surface (15) comprises imaging spherical mirror elements (17 to 20) each corresponding to a quarter segment of a spherical mirror and being skewed relative to the others in the manner of a propeller and slightly inclined relative to the axis of the mirror, the four deflecting mirrors (10, 12, 13, 14) being so positioned that the four similar non-homogeneous light source images are reproduced on the mirror elements (17 to 20) along a closed ring, each image being offset along the ring by one mirror element relative to the deflecting mirrors (10, 12, 13, 14), which mirror elements (17 to 20) in their turn reproduce four condenser images superimposed on one another and rotated by 90 relative to one another in the image field (30).

9. An illuminating apparatus according to claim 1, wherein the light source is a halogen metal vapour lamp and the secondary light source surface (43) comprises imaging spherical mirror elements (51 to 58) each corresponding to a one-eighth segment of a spherical mirror, wherein the partition lines between the segments (51 to 58) form a principal cross (59) oriented in the directions of the deflecting mirrors (10, 12, 13, 14) and a secondary cross (60) rotated by 45° relative to the principal cross, wherein the four deflecting mirrors (10, 12, 13, 14) are so positioned that the four light source images each extend along and laterally offset relative to a continuous arm of the principal cross (59), and wherein the mirror segments (51 to 58) associated with each other in pairs and each bordered on one side by a continuous arm of the principal cross (59) are so skewed relative to one another that the four condenser images produced by the mirror elements (51 to 58) overlap in the image field (30).

10. An illuminating apparatus according to claim 1, wherein the light source is a short arc lamp and an anamorphic illuminating optical device is provided in the beam path in order to convert a square condenser image into a rectangle, and wherein the secondary light source surface (31, 32) has an external contour in the shape of an ellipse and is divided into segments (34 to 41) along curved lines (33).

11. An illuminating apparatus according to claim 10, wherein the four deflecting mirrors (10, 12, 13, 14) are so positioned that, in the centre of the ellipse, two light source images offset in the longitudinal direction are reproduced transversely to the major axis of the ellipse and, in the region of each end of the major axis, a light source image having its brightest region pointing outward is reproduced along the major axis.

12. An illuminating apparatus according to claim 10, wherein the curved lines (33) between the segments (34 to 41) extend along the intersections of lines of equal luminosity of adjacent light source images.

13. An illuminating apparatus according to claim 1, wherein the light source is a halogen metal vapour lamp, wherein an anamorphic illuminating optical device is provided in the beam path in order to convert a square condenser image into a rectangle, and wherein the secondary light source surface (70, 80) has an external contour in the shape of an ellipse and is divided into segments along straight lines and a concentric inner ellipse.

14. An illuminating apparatus according to claim 13, wherein the four deflecting mirrors (10, 12, 13, 14) are so positioned that two arc images are laterally offset relative to the minor axis and two arc images are offset in the longitudinal direction on the major axis of the ellipse (70).

15. An illuminating apparatus according to claim 13, wherein the four deflecting mirrors (10, 12, 13, 14) are so positioned that the four arc images are reproduced along an elliptical ring (80).

## Revendications

1. Dispositif d'éclairage à des fins de projection, notamment pour un projecteur de films ou un projecteur d'images de télévision selon le système "eidophore", comprenant une source lumineuse (1) à rayonnement panoramique autour de laquelle sont disposés, dans un plan coupant la source lumineuse (1) en son centre de rayonnement, quatre condenseurs (4, 5, 8, 9) dont les axes optiques sont orientés vers la source lumineuse (1), ainsi que des miroirs déflecteurs (10, 12, 13, 14) qui sont respectivement associés aux condenseurs (4, 5, 8, 9), sont basculés autour d'un axe s'étendant, dans le plan, transversalement par rapport au trajet lumineux, et par l'intermédiaire desquels quatre représentations de la source lumineuse (1) peuvent être engendrées sur une surface de source lumineuse secondaire (15, 31, 32, 43, 70, 80) qui est prévue à distance du plan passant par la source lumineuse (1), présente des éléments constitutifs optiques voisins de représentation, et à laquelle est associée une optique à travers laquelle la lumière de la surface de source lumineuse secondaire parvient au champ d'image (30), ainsi qu'à la pupille d'entrée d'une optique de projection installée en aval sur la trajectoire du rayonnement (28, 29), et à travers laquelle les images des condenseurs (4, 5, 8, 9) sont représentées avec superposition et décalage mutuel dans le plan du champ d'image dispositif caractérisé par le fait que les éléments constitutifs optiques, prévus dans la surface de source lumineuse secondaire, sont réalisés sous la forme de segments voisins (17 à 20, 34 à 41, 51 à 58, 71 à 78) qui sont réciproquement décalés le long de leurs délimitations marginales (16, 33, 42, 59, 60) ; et par le fait que les miroirs déflecteurs (10, 12, 13, 14) sont basculés, par rapport au plan délimité par les axes optiques des condenseurs (4, 5, 8, 9), autour d'axes qui sont, eux aussi, réciproquement décalés en concordance avec les décalages des segments associés (17 à 20, 34 à 41, 51 à 58, 71 à 78).

2. Dispositif d'éclairage selon la revendication 1, caractérisé par le fait que les segments (17 à 20, 34 à 41, 51 à 58, 71 à 78) consistent en des lentilles qui reproduisent, en superposition, les images des condenseurs.

3. Dispositif d'éclairage selon la revendication 1, caractérisé par le fait que les segments (17 à 20, 34 à 41, 51 à 58, 71 à 78) consistent en des segments de miroir.

4. Dispositif d'éclairage selon la revendication 3, caractérisé par le fait que les segments de miroir (17 à 20, 34 à 41, 51 à 58, 71 à 78) et/ou les miroirs déflecteurs (10, 12, 13, 14) sont réalisés en tant que miroirs à lumière froide.

5. Dispositif d'éclairage selon la revendication 4, caractérisé par le fait que les segments de miroir (17 à 20, 34 à 41, 51 à 58, 71 à 78) présentent des supports en verre réalisés sous la forme d'une lentille collectrice d'infrarouges.

6. Dispositif d'éclairage selon l'une des revendications précédentes, caractérisé par le fait que les segments voisins (17 à 20, 34 à 41, 51 à 58, 71 à 78) ont un contour extérieur commun dont la configuration est adaptée à la forme de la pupille d'entrée de l'optique successive.

7. Dispositif d'éclairage selon l'une des revendications précédentes, caractérisé par le fait qu'un miroir de découplage (27) orienté transversalement par rapport à la trajectoire du rayonnement (28), est prévu sur la trajectoire du rayonnement (28, 29), entre la surface de source lumineuse secondaire (15, 31, 43, 70, 80) et le champ d'image (30).

8. Dispositif d'éclairage selon la revendication 1, caractérisé par le fait que la source lumineuse (1) est une lampe à arc bref, et la surface de source lumineuse secondaire (15) présente des éléments de miroir sphériques de représentation (17 à 20) qui correspondent respectivement à un quart d'un miroir sphérique, sont réciproquement décalés à la manière d'une hélice et sont légèrement inclinés par rapport à l'axe du miroir, la position des quatre miroirs déflecteurs (10, 12, 13, 14) étant ajustée de telle sorte que les quatre images identiques et non homogènes de la source lumineuse soient reproduites sur les éléments de miroir (17 à 20) le long d'un anneau fermé par rapport aux miroirs déflecteurs (10, 12, 13, 14), à chaque fois avec décalage d'un élément de miroir le long dudit anneau, lesquels éléments reproduisent à leur tour en superposition, dans le champ d'image (30), quatre images de condenseurs respectivement décalées de 90 degrés les unes par rapport aux autres.

9. Dispositif d'éclairage selon la revendication 1, caractérisé par le fait que la source lumineuse est une lampe à halogène à vapeur métallique, et la surface de source lumineuse secondaire (43) présente des éléments de miroir sphériques de représentation (51 à 58) correspondant, à chaque fois, à un huitième d'un miroir sphérique ; par le fait que les lignes de séparation entre les segments (51 à 58) forment une croix principale (59) orientée dans les directions des miroirs déflecteurs (10, 12, 13, 14), et une croix secondaire (60) décalée de cette dernière de 45 degrés ; par le fait que les quatre miroirs déflecteurs (10, 12, 13, 14) sont ajustés de telle sorte que les quatre images de la source lumineuse s'étendent à chaque fois, avec décalage latéral, le long d'un bras ininterrompu de la croix principale (59) ; et par le fait que les segments de miroir (51 à 58) mutuellement associés par paires, unilatéralement jouxtés par un bras ininterrompu respectif de la croix principale (59), présentent à chaque fois un décalage tel que les quatre images des condenseurs, engendrées par les éléments de miroir (51 à 58), se chevauchent dans le champ d'image (30).

10. Dispositif d'éclairage selon la revendication 1, caractérisé par le fait que la source lumineuse est une lampe à arc bref et une optique d'éclairage anamorphotique est prévue, sur la trajectoire du rayonnement, pour convertir en un rectangle une image de condenseur carrée ; et par le fait que la surface de source lumineuse secondaire (31, 32) présente un contour extérieur revêtant la forme d'une ellipse et est scindée en des segments (34 à 41) le long de lignes courbes (33).

11. Dispositif d'éclairage selon la revendication 10, caractérisé par le fait que les quatre miroirs déflecteurs (10, 12, 13, 14) sont ajustés de telle sorte que deux images de la source lumineuse décalées dans le sens longitudinal soient reproduites au centre de l'ellipse, transversalement par rapport à l'axe principal de cette ellipse, et qu'une image de la source lumineuse, dont les régions les plus claires sont respectivement orientées vers l'extérieur, soit à chaque fois reproduite au voisinage des extrémités des axes principaux, le long de ces axes principaux.

12. Dispositif d'éclairage selon la revendication 10, caractérisé par le fait que les lignes courbes (33), entre les segments (34 à 41), s'étendent le long des points d'intersection de lignes, de même luminosité, d'images de source lumineuse voisines.

13. Dispositif d'éclairage selon la revendication 1, caractérisé par le fait que la source lumineuse est une lampe à vapeur halogene / metal ; par le fait qu'une optique d'éclairage anamorphotique est prévue, sur la trajectoire du rayonnement, pour convertir en un rectangle une image de condenseur carrée ; et par le fait que la surface de source lumineuse secondaire (70, 80) présente un contour extérieur revêtant la forme d'une ellipse, et est scindée en des segments le long de droites et d'une ellipse intérieure concentrique.

14. Dispositif d'éclairage selon la revendication 13, caractérisé par le fait que les quatre miroirs déflecteurs (10, 12, 13, 14) sont ajustés de telle sorte que deux images d'arc électrique soient latéralement décalées par rapport à l'axe secondaire, et que deux images d'arc électrique se trouvent sur l'axe principal de l'ellipse (70), avec décalage dans le sens longitudinal.

15. Dispositif d'éclairage selon la revendication 13, caractérisé par le fait que les quatre miroirs déflecteurs (10, 12, 13, 14) sont ajustés de telle sorte que les quatre images d'arc électrique soient reproduites le long d'un anneau elliptique (80).
